# EUROPÄISCHE PATENTSCHRIFT

(11) **EP 1 076 770 B1**
(45) Veröffentlichungstag und Bekanntmachung des Hinweises auf die Patenterteilung: **16.04.2003**
(21) Anmeldenummer: 99932632.5
(22) Anmeldetag: 05.05.1999
(51) Int. Cl.: F02M 61/16, F02M 61/10

(54) **KRAFTSTOFFEINSPRITZVENTIL FÜR BRENNKRAFTMASCHINEN**
FUEL INJECTION VALVE FOR INTERNAL COMBUSTION ENGINES
SOUPAPE D'INJECTION DE CARBURANT POUR MOTEURS A COMBUSTION INTERNE

(30) Priorität: 07.05.1998 DE 19820456
(43) Veröffentlichungstag der Anmeldung: 21.02.2001
(73) Patentinhaber: SIEMENS AKTIENGESELLSCHAFT, 80333 München (DE)
(72) Erfinder: YALCIN, Hakan, D-93059 Regensburg (DE); LEWENTZ, Günter, D-93055 Regensburg (DE)
(86) Internationale Anmeldenummer: DE9901356
(87) Internationale Veröffentlichungsnummer: WO99057432

(56) Entgegenhaltungen:
- EP-A- 0 363 142
- DE-A- 3 531 761
- GB-A- 962 870

## Beschreibung

Die Erfindung betrifft ein Kraftstoffeinspritzventil gemäß dem Oberbegriff von Patentanspruch 1.

Ein solches Kraftstoffeinspritzventil ist aus dem Dokument EP 0 363 142 A1 bekannt. Im Düsenkörper des bekannten Kraftstoffeinspritzventils ist die Zwischenwand zwischen der Führungsbohrung und dem Kraftstoffzulaufkanal durch den hohen Einspritzdruck extrem belastet. Der Kraftstoffzulaufkanal verläuft, von der Stirnseite des Düsenkörpers ausgehend, zuerst im wesentlichen parallel zur Führungsbohrung, um dann im weiteren Verlauf gekrümmt in Richtung des Druckraums abzubiegen und schließlich in den Druckraum zu münden.

Die Aufgabe der Erfindung besteht darin, die Druckfestigkeit des Kraftstoffeinspritzventils zu steigern.

Die Aufgabe der Erfindung wird durch die Merkmale des Patentanspruchs 1.

Weitere vorteilhafte Ausbildungen und Verbesserungen der Erfindung sind in den abhängigen Ansprüchen angegeben.

Ein Vorteil der Erfindung besteht darin, die Druckfestigkeit des Düsenkörpers zu erhöhen. Ein weiterer Vorteil liegt im geringen Fertigungsaufwand.

Ein Kraftstoffeinspritzventil, insbesondere für Dieselkraftstoff, muß eine hohe Druckfestigkeit aufweisen, um dem hohen Kraftstoffdruck standzuhalten. Die Druckfestigkeit ist abhängig von den erzielbaren minimalen Wandstärken der Komponenten des Kraftstoffeinspritzventils. Durch die Ausbildung eines gekrümmten Zulaufkanals im Düsenkörper wird eine große Wandstärke in kritischen Bereichen und somit eine hohe Druckfestigkeit erzielt.

Im folgenden werden die Figuren näher erläutert; es zeigen:
- Figur 1: einen Längsschnitt durch einen Teil eines nicht erfindungsgemäßen Kraftstoff-einspritzventils,
- Figur 2: einen Längsschnitt eines nicht erfindungsgemäßen Düsenkörpers,
- Figur 3: einen Längsschnitt eines Ausführungsbeispiels eines Düsenkörpers und eines Zwischenstücks, und gekrümmten Zulaufkanals in einem Düsenkörper.

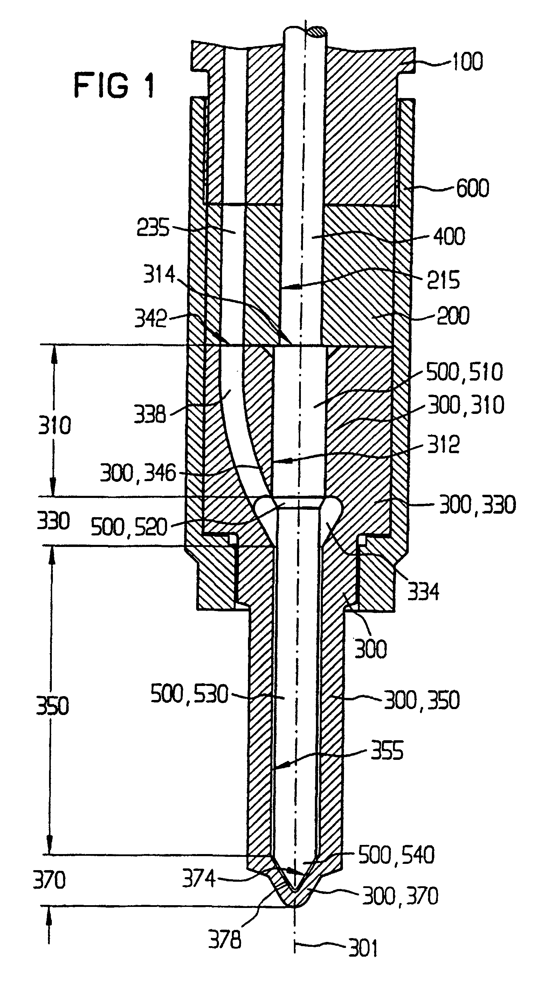

Elemente gleicher Konstruktion oder Funktion tragen in den Figuren 1 bis 3 im Allgemeinen dieselben Bezugszeichen.

Der in Figur 1 dargestellte Teil eines Kraftstoffeinspritzventils weist einen Düsenkörper 300 mit rotationssymmetrischer Grundform auf, der unter Zwischenlage eines Zwischenstücks 200 mittels einer hülsenförmigen Überwurfmutter 600 an einen Düsenhalterkörper 100 befestigt ist.

Der Düsenkörper 300 ist von seinem stirnseitigen, zum Düsenhalterkörper 100 weisenden Ende in folgende Körperabschnitte unterteilt: in einen Führungsbereich 310, einen Druckraumbe-reich 330, einen Schaftbereich 350 und eine den Düsenkörper 300 abschließenden Düsenspitze 370. Das stirnseitige Ende ist als ringförmige Fläche ausgebildet, wobei dessen Normale vorzugsweise parallel zur Längsachse 301 des Düsenkörpers gerichtet ist.

Der Düsenkörper 300 weist eine an seinem stirnseitigen Ende beginnende und an seiner Düsenspitze 370 endende, zentrale Düsenkörperbohrung auf, dessen Durchmesser und Funktion mit den Körperabschnitten des Düsenkörpers 300 variiert. In der Düsenkörperbohrung ist eine Düsennadel 500 angeordnet, die in Richtung der Düsenspitze 370 in einen Führungskolben 510, eine Ringschulter 520, einen Schaftkolben 530 und eine Ventilspitze 540 unterteilt ist.

Der Führungsbereich 310 weist eine zentrale Führungsbohrung 312 auf, die zur Führung des Führungskolbens 510 dient und die an der Stirnseite des Führungsbereichs 310 eine Bohrungsöffnung 314 hat.

An den Führungsbereich 310 schließt der Druckraumbereich 330 an, der einen Druckraum 334 aufweist. Die Führungsbohrung 312 mündet in den Druckraum 334, in den der Führungskolben 510 geführt ist. Vorzugsweise im Druckraum 334 geht der Führungskolben 510 in die sich konisch verjüngende Ringschulter 520 über, die in den Schaftkolben 530 übergeht.

Seitlich der Führungsbohrung 312 ist ein Zulaufkanal 338 angeordnet, der vorzugsweise seitlich in den Druckraum 334 mündet. Der Zulaufkanal 338 weist am stirnseitigen Ende des Führungsbereichs 310 eine Zulauföffnung 342 auf und ist über seine gesamte Länge gekrümmt. Vorzugsweise ist die Krümmung annähernd kreisförmig ausgebildet. Die Mittellinie des Zulaufkanals 338 bildet eine Ebene, die vorzugsweise durch die Längsachse 301 des Düsenkörpers 300 verläuft.

Der Schaftbereich 350 schließt an den Druckraumbereich 330 an und weist eine Schaftbohrung 355 auf, die an den Druckraum 334 anschließt und durch die der Schaftkolben 530 verläuft.

Der Druckraum 334 ist als vorzugsweise symmetrische, im querschnitt henkelförmige Ausnehmung ausgebildet, die zwischen der Führungsbohrung 312 und der Schaftbohrung 355 liegt. Im Bereich des oberen Teils des Henkels schließt die Wandung der Führungsbohrung 312 mit der Wandung des Druckraum 334 einen Winkel ein, der vorzugsweise im Bereich von 90° liegt. Im Bereich des unteren Teils des Henkels läuft der Druckraum 334 konisch zusammen, die Wandung des Druckraums 334 geht unter einem flachen Winkel in die Wandung des Schaftbereichs 350 über.

An den Schaftbereich 350 schließt die konisch zulaufende Düsenspitze 370 an, die einen innenliegenden Ventilsitz 374 zur Aufnahme der Ventilspitze 540 aufweist. Die Düsenspitze 370 weist mindestens ein Spritzloch 378 auf, durch das der Kraftstoff in den Brennraum der Brennkraftmaschine eingespritzt wird. Die axiale Bewegung der Ventilspitze 540 steuert den Kraftstoffzufluß in den Brennraum, wobei im Ruhezustand die Ventilspitze 540 die Spritzlöcher 378 abdeckt bzw. den Kraftstoffzufluß zu den Spritzlöchern 378 unterbricht. Der Kraftstoff wird im Düsenkörper 300 vom Zulaufkanal 338 über den Druckraum 334, die Schaftbohrung 355, den Ventilsitz 374 zu den Spritzlöchern 378 geführt.

Die Außenseite des Düsenkörpers 300 ist vorzugsweise in Höhe des Druckraumes 334 und in Höhe des Schaftbereichs 350 abgestuft, wobei sich der Durchmesser des Düsenkörpers 300 in Richtung der Düsenspitze 370 verringert.

Das Zwischenstück 200 ist hohlzylindrisch ausgebildet und weist eine zentrale Kolbenbohrung 215 zur Führung eines Kolbens 400 und einen seitlich, vorzugsweise annähernd parallel zur Kolbenbohrung 215 angeordneten Zuführungskanal 235 auf.

Das Zwischenstück 200 begrenzt den Hub der Düsennadel 500, da die Kolbenbohrung 215 einen geringeren Durchmesser aufweist als der Führungskolben 510 der Düsennadel 500.

Der Kolben 400 überträgt die axiale, durch ein Steuerventil oder einen Aktor erzeugte Bewegung auf die Düsennadel 500. Die Düsennadel 500 übt auf den Kolben 400 eine axial in Richtung des Kolbens 400 gerichtete Kraft aus, die vom Kraftstoffdruck auf die Ringschulter 520 und auf die wirksame Ringfläche an der Ventilspitze 540 erzeugt wird.

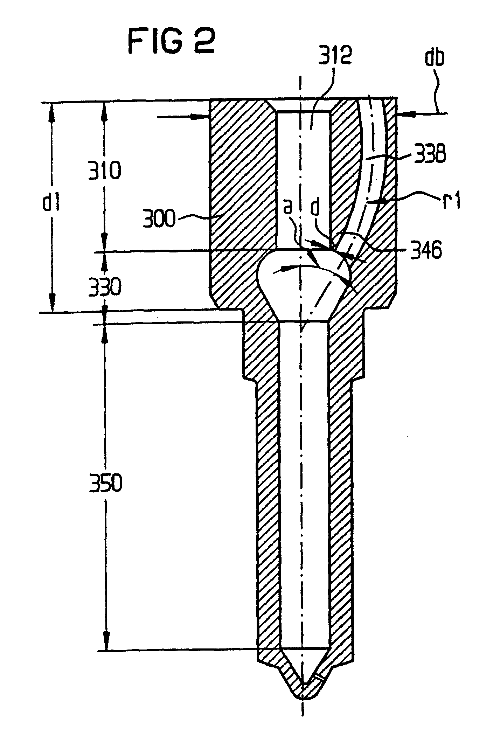

Zur Verdeutlichung sind einige Bezugszeichen aus der Figur 1 ebenfalls in der Figur 2 aufgeführt.

Figur 2 zeigt Details des Kraftstoffeinspritzventils aus Figur 1 mit dem Düsenkörper 300, dessen Zulaufkanal 338 vorzugsweise anhand des Erodierverfahrens annähernd kreisförmig ausgebildet ist. Die Krümmung des Zulaufkanals 338 an dessen Mittellinie weist einen ersten Radius r1 auf. r

Der Bereich, der zwischen dem Absatz in Höhe des Druckraumes 334 und dem stirnseitigen Ende des Führungsbereichs 310 liegt, ist der Bundbereich mit der Bundlänge dl und dem Bunddurchmesser db in Höhe des Druckraumes 334.

Zwischen dem Zulaufkanal 338 und der Führungsbohrung 312 liegt eine Zwischenwand 346. An den Mündungen des Zulaufkanals 338 und der Führungsbohrung 312 in den Druckraum 334 weist die Zwischenwand 346 eine geringste Wandstärke d auf. Eine große Wandstärke d führt vorteilhaft zu einer hohen Druckfestigkeit des Düsenkörpers 300. Der Zulaufkanal 338 schließt mit der Führungbohrung 312 einen Winkel a ein. Die Wandstärke d hängt u.a. vom Winkel a, vom ersten Radius r1, vom Bunddurchmesser db, von der Bundlänge dl ab.

Je kleiner die Bundlänge dl bei vorgegebener Position des Absatzes in Höhe des Druckraumes 334, je größer der Bunddurchmesser db, desto kleiner kann der erste Radius r1 ausgebildet werden, was zu einem größerem Winkel a und vorteilhaft einer größeren Wandstärke d führt.

Der Düsenkörper aus Figur 2 weist einen Bunddurchmesser db von 14,3 mm und eine Bundlänge dl von etwa 15 mm auf. Der erste Radius r1 liegt im Bereich zwischen 30 mm und 50 mm, vorzugsweise bei etwa 35 mm. Der Winkel a liegt etwa im Bereich von 30° bis 40°, vorzugsweise bei etwa 33°.

Andere Ausbildungsformen mit abweichenden Bunddurchmessern db und Bundlängen d1, weisen entsprechend andere Bereiche des ersten Radius r1 und des Winkels a auf. Vorzugsweise liegt der Winkel a im Bereich von 30° bis 40° und der erste Radius im Bereich zwischen 30mm und 50mm.

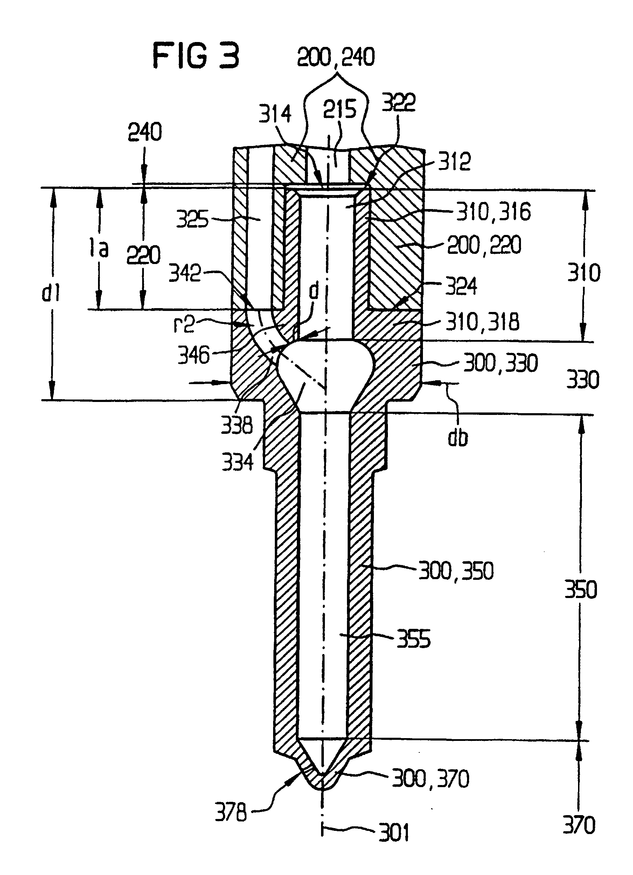

Figur 3 zeigt ein Ausführungsbeispiel des Düsenkörpers 300 mit dem Zwischenstück 200.

Im Unterschied zu Figur 2 ist der Führungsbereich 310 durch einen Absatz in einen oberen Körperabschnitt 316 mit einer ringförmigen Stirnfläche 322 und in einen unteren Körperabschnitt 318 mit einer ringförmigen Schulterfläche 324 abgestuft, wobei der obere Körperabschnitt 316 am stirnseitigen Ende des Führungsbereichs 310 gelegen ist. Die Normalen der Stirnfläche 322 und der Schulterfläche 324 sind vorzugsweise annähernd parallel zur Längsachse 301 des Düsenkörpers 301 gerichtet. Der obere Körperabschnitt 316 weist einen geringeren Durchmesser auf als der untere Körperabschnitt 318. Die Stirnfläche 322 weist die Bohrungsöffnung 314 auf, die Schulterfläche 324 weist die Zulauföffnung 342 auf.

Der axiale Höhenunterschied zwischen der Stirnfläche 322 und der Schulterfläche 324 ist die Absatzlänge la.

Die Krümmung des Zulaufkanals 338 weist an dessen Mittellinie einen zweiten Radius r2 auf, der bei vorgegebener Geometrie des Düsenkörpers 300 kleiner ist als der erste Radius r1 aus Figur 2. Die Länge des Zulaufkanals 338 ist durch den Absatz verkürzt, vorteilhaft ist dadurch eine schnellere und kostengünstigere Fertigung erreichbar, z.B. bei einem anhand der Figur 4 beschriebenen Fertigungsverfahren.

Der in Figur 2 aufgezeigte Zusammenhang zwischen der Wanddicke d, dem Winkel a, dem ersten Radius r1, dem Bunddurchmesser db und der Bundlänge dl gilt entsprechend im Ausführungsbeispiel der Figur 3, wobei die Krümmung des Zulaufkanals 338 hier durch den zweiten Radius r2 dargestellt ist. Zusätzlich besteht ein Zusammenhang mit der Absatzlänge la: Je größer die Absatzlänge la, desto desto kleiner kann der zweite Radius r2 ausgebildet werden, was zu einem größerem Winkel a und vorteilhaft einer größeren Wandstärke d führt.

Dieser Zusammenhang gilt auch für Düsenkörper mit Ausbildungsformen, die von den in den Ausbildungsbeispielen angegebenen Ausbildungsformen abweichen.

Eine Ausführungsform des Düsenkörpers aus Figur 3 weist einen Bunddurchmesser von 14,3 mm und eine Bundlänge von etwa 15 mm auf. Abhängig von der Absatzlänge la liegt der zweite Radius r2 im Bereich zwischen 5 mm und 10 mm, vorzugsweise bei etwa 7 mm. Der Winkel a liegt etwa im Bereich von 40° bis 70°, vorzugsweise bei etwa 60°. Die bevorzugte Ausbildungsform tritt bei einer Absatzlänge von etwa 9 mm auf.

Andere Ausbildungsformen mit abweichenden Bunddurchmessern db und Bundlängen dl weisen entsprechende Bereiche des ersten Radius r1 und des Winkels a auf. Vorzugsweise liegt der zweite Radius r2 im Bereich von 5 mm und 10 mm, der Winkel a im Bereich von 40° bis 70°.

Das Zwischenstück 200 ist durch einen Absatz an seiner zur Kolbenbohrung 215 weisenden Innenseite in axialer Richtung in einen hohlzylindrischen Zuführungsbereich 220 und einen hohlzylindrischen Kolbenbereich 240 unterteilt, wobei der Kolbenbereich 240 einen geringeren Innendurchmesser aufweist als der Zuführungsbereich 220. Der Kolbenbereich 240 ist näher am Düsenhalterkörper 100 gelegen als der Zuführungsbereich 220.

Der zuführungskanal 235 verläuft im Mantel des Zuführungsbereichs 220 und des Kolbenbereichs 240 vorzugsweise annähernd parallel zur Kolbenbohrung 215.

Der Absatz des Zwischenstücks 200 schließt mit dem am stirnseitigen Ende des Düsenkörpers 300 gelegenen Absatz des Führungsbereichs 310 schlüssig ab. Der Zulaufkanal 338 des Düsenkörpers 300 schließt an den Zuführungskanal 235 des Zwischenstücks 200 an.

Die Schulterfläche 324 des Düsenkörpers 300 liegt plan an der stirnseitigen Fläche des Zwischenstücks 200 an. Durch die starke Preßkraft zwischen Düsenkörper 300 und Zwischenstück 200 entsteht eine hochdruckfeste Verbindung.

## Patentansprüche

1. Kraftstoffeinspritzventil mit einem Düsenkörper (300), der aufweist:
einen Führungsbereich (310) an seinem stirnseitigen Ende mit einer zentralen Führungsbohrung (312),
einen Druckraumbereich (330), der an den Führungsbereich (310) anschließt und einen Druckraum (334) aufweist, in den die Führungsbohrung (312) mündet,
einen Zulaufkanal (338), der seitlich der Führungsbohrung (312) angeordnet ist und der in den Druckraum (334) mündet,
**dadurch gekennzeichnet,**
**daß** der gesamte Zulaufkanal (338) gekrümmt ist,
**daß** der Führungsbereich (310) durch einen Absatz in einen oberen Körperabschnitt (316) mit einer Stirnfläche (322) und einen unteren Körperabschnitt (318) mit einer Schulterfläche (324) abgestuft ist,
**daß** die Führungbohrung (312) an der Stirnfläche (322) eine Bohrungsöffnung (314) aufweist,
**daß** der Zulaufkanal (338) an der Schulterfläche (324) eine Zulauföffnung (342) aufweist,
**daß** der untere Körperabschnitt (318) näher am Druckraumbereich (330) angeordnet ist als der obere Körperabschnitt (316),
**daß** der obere Körperabschnitt (316) einen geringeren Durchmesser als der untere Körperabschnitt (318) hat.

2. Kraftstoffeinspritzventil nach Anspruch 1, **dadurch gekennzeichnet,**
**daß** der Zulaufkanal (338) annähernd kreisförmig gekrümmt ist.

3. Kraftstoffeinspritzventil nach einem der Ansprüche 1 bis 2, **dadurch gekennzeichnet,**
**daß** der Winkel (a), den der Zulaufkanal (338) an seiner Mündung zum Druckraum (334) mit der Führungsbohrung (312) einschließt, im Bereich von 30° bis 40° liegt.

4. Kraftstoffeinspritzventil nach Anspruch 1, **dadurch gekennzeichnet,**
**daß** die Krümmung des Zulaufkanals (338) an dessen Mittellinie einen Radius (r2) aufweist, der zwischen 5 mm und 10 mm liegt.

5. Kraftstoffeinspritzventil nach einem der Ansprüche 1 oder 4, **dadurch gekennzeichnet,**
**daß** der Winkel (a), den der Zulaufkanal (338) an seiner Mündung zum Druckraum (334) mit der Führungsbohrung (312) einschließt, im Bereich von 40° bis 70° liegt.

6. Kraftstoffeinspritzventil nach einem der Ansprüche 1 bis 5, **dadurch gekennzeichnet**
**daß** zwischen dem Düsenkörper (300) und einem Düsenhalterkörper (100) ein hohlzylindrisches Zwischenstück (200) angeordnet ist, das eine zentrale Kolbenbohrung (215) zur Führung eines Kolbens (400) und einen seitlich der Kolbenbohrung (215) angeordneten Zuführungskanal (235) aufweist,
**daß** das Zwischenstück (200) an seiner zur Kolbenbohrung (215) weisenden Seite durch einen Absatz in einen hohlzylindrischen Zuführungsbereich (220) und in einen hohlzylindrischen Kolbenbereich (240) unterteilt ist,
**daß** der Kolbenbereich (240) näher am Düsenhalterkörper (100) angeordnet ist als der Zuführungsbereich (220),
**daß** der Kolbenbereich (240) einen geringeren Innendurchmesser als der Zuführungsbereich (220) aufweist,
**daß** der Zuführungskanal (235) im Mantel des Zuführungsbereichs (220) und im Mantel des Kolbenbereichs (240) angeordnet ist.

## Claims

1. Fuel injection valve with a nozzle body (300), having:
a guide area (310) at its end face with a central guide bore (312),
a pressure chamber area (330), that connects to the guide area (310) and has a pressure chamber (334) in which the guide bore (312) terminates,
an inlet channel (338) which is arranged to the side of the guide bore (312) and terminates in the pressure chamber (334),
**characterised in that**
the complete inlet channel (338) is curved,
the guide area (310) is arranged in steps by a step in an upper body section (316) with an end face (322) and a lower body section (318) with a shoulder face (324),
the guide bore (312) has a bore opening (314) at the end face (322),
the inlet channel (338) has an inlet opening (342) at the shoulder face (324),
the lower body section (318) is positioned closer to the pressure chamber area (330) than is the upper body section (316),
the upper body section (316) has a smaller diameter than the lower body section (318).

2. Fuel injection valve according to Claim 1, **characterised in that** the inlet channel (338) has an almost circular curve.

3. Fuel injection valve according to one of Claims 1 to 2, **characterised in that** the angle (a) that encloses the inlet channel (338) at its entry to the pressure chamber (334) with the guide bore (312) lies within the range of 30° to 40°.

4. Fuel injection valve according to Claim 1, **characterised in that**
the curvature of the inlet channel (338) has a radius (r2) at its centre line that lies between 5 mm and 10 mm.

5. Fuel injection valve according to one of claims 1 or 4, **characterised in that**
the angle (a) that includes the inlet channel (338) at its entry into the pressure chamber (334) with the guide bore (312) lies within the range of 40° to 70°.

6. Fuel injection valve according to one of Claims 1 to 5, **characterised in that**
between the nozzle body (300) and a nozzle holder body (100) a hollow cylindrical intermediate piece (200) is arranged, that has a central piston bore (215) to guide a piston (400) and an inlet channel (235) arranged to the side of the piston bore (215),
the intermediate piece (200) is divided at its end facing the piston bore (215) by a step into a hollow cylindrical inlet area (220) and a hollow cylindrical piston area (240),
the piston area (240) is positioned closer to the nozzle holder body (100) than is the inlet area (220),
the piston area (240) has a smaller internal diameter than the inlet area (220),
the inlet channel (235) is arranged in the jacket of the inlet area (220) and in the jacket of the piston area (240).

## Revendications

1. Injecteur de carburant avec un corps d'injecteur (300) présentant :
une zone de guidage (310), située à son extrémité frontale, avec une perforation centrale de guidage (312),
une zone (330) d'espace de compression, qui est raccordée à la zone de guidage (310) et présente un espace de compression (334) dans lequel débouche la perforation de guidage (312),
un canal d'amenée (338) qui est disposé latéralement à la perforation de guidage (312) et débouche dans l'espace de compression (334),
**caractérisé en ce que**
l'ensemble du canal d'amenée (338) est incurvé,
la zone de guidage (310) est étagée par un palier en une partie de corps supérieure (316) comprenant une surface frontale (322) et en une partie de corps inférieure (318) comprenant une surface d'épaulement (324),
la perforation de guidage (312) présente une ouverture de guidage (314) située sur la surface frontale (322),
le canal d'amenée (338) présente une ouverture d'amenée (342) située sur la surface d'épaulement (324),
la partie de corps inférieure (318) est disposée plus près de la zone (330) d'espace de compression que la partie de corps supérieure (316),
la partie de corps supérieure (316) a un diamètre inférieur à celui de la partie de corps inférieure (318).

2. Injecteur de carburant selon la revendication 1, **caractérisé en ce que**
le canal d'amenée (338) est incurvé de manière approximativement circulaire.

3. Injecteur de carburant selon l'une des revendications 1 à 2, **caractérisé en ce que**
l'angle (a) que forme le canal d'amenée (338) à l'endroit où il débouche dans l'espace de compression (334) avec la perforation de guidage (312) est compris entre 30° et 40°.

4. Injecteur de carburant selon la revendication 1, **caractérisé en ce que**
la courbure du canal d'amenée (338) présente en sa ligne médiane un rayon (r2) compris entre 5 mm et 10 mm.

5. Injecteur de carburant selon l'une des revendications 1 ou 4, **caractérisé en ce que**
l'angle (a) que forme le canal d'amenée (338) à l'endroit où il débouche dans l'espace de compression (334) avec la perforation de guidage (312) est compris entre 40° et 70°.

6. Injecteur de carburant selon l'une des revendications 1 à 5, **caractérisé en ce que**
entre le corps d'injecteur (300) et un corps porte-injecteur (100) est disposée une pièce intermédiaire (200), en forme de cylindre creux, qui présente une perforation centrale (215) pour piston permettant le passage d'un piston (400) et un canal d'alimentation (235) disposé latéralement à la perforation pour piston (215),
la pièce intermédiaire (200) est divisée, du côté orienté vers la perforation pour piston (215), par un palier en une zone d'alimentation (220) en forme de cylindre creux et en une zone de piston (240) en forme de cylindre creux,
la zone de piston (240) est disposée plus près du corps porte-injecteur (100) que la zone d'alimentation (220),
la zone de piston (240) présente un diamètre intérieur inférieur à celui de la zone d'alimentation (220),
le canal d'alimentation (235) est disposé dans le corps de la zone d'alimentation (220) et dans le corps de la zone de piston (240).
